(19) Europäisches Patentamt
European Patent Office
Office européen des brevets

(11) **EP 4 468 542 A1**

(12) **EUROPÄISCHE PATENTANMELDUNG**

(43) Veröffentlichungstag:
**27.11.2024 Patentblatt 2024/48**

(21) Anmeldenummer: 23174875.7

(22) Anmeldetag: **23.05.2023**

(51) Internationale Patentklassifikation (IPC):
**H02H 7/045** $^{(2006.01)}$

(52) Gemeinsame Patentklassifikation (CPC):
**H02H 7/045**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder:
• **Mieske, Frank
13053 Berlin (DE)**
• **Rebizant, Waldemar
53-641 Wroclaw (PL)**
• **Solak, Krzysztof
55-330 Mrozow (PL)**

(74) Vertreter: **Siemens Patent Attorneys
Postfach 22 16 34
80506 München (DE)**

(54) **VERFAHREN ZUM ERKENNEN EINES WINDUNGSFEHLERS IN EINEM TRANSFORMATOR EINES ELEKTRISCHEN ENERGIEVERSORGUNGSNETZES**

(57) Die Erfindung betrifft ein Verfahren zum Erkennen eines Windungsfehlers in einem Transformator (1) eines Wechselstrom führenden elektrischen Energieversorgungsnetzes (3,4), bei dem auf der Oberspannungsseite (H) und der Unterspannungsseite (X) des Transformators phasenleiterbezogene Strommesswerte erfasst werden; aus den phasenleiterbezogenen Strommesswerten für die Oberspannungsseite (H) und die Unterspannungsseite (X) jeweils Gegensystemstromwerte ($I_{2TH}$, $I_{2TX}$) bestimmt werden; aus der absoluten Summe der Gegensystemstromwerte das Gegensystemstromdifferential ($I_{2D} = |I_{2TH} + I_{2TX}|$) gebildet wird; mit Hilfe des Gegensystemstromdifferentials eine Auslösegröße und mit Hilfe der Auslösegröße ein Auslösekriterium definiert werden, und bei dem wenigstens ein Stabilisierungskriterium festgelegt wird; wobei ein Fehlersignal erzeugt wird, wenn neben dem Auslösekriterium wenigstens ein Stabilisierungskriterium erfüllt ist. Bei diesem Verfahren soll die Empfindlichkeit zum Erkennen von Windungsfehlern erhöht werden. Dazu wird vorgeschlagen, dass ein inkrementelles Gegensystemstromdifferential $\Delta I_{2D}$ als Auslösegröße verwendet wird, das als absolute Differenz von einem aktuellen Gegensystemstromdifferential $I_{2D}$ und einem um eine Netzfrequenzperiode phasenverschobenen Gegensystemstromdifferential $I_{2D}^{b}$ gebildet wird, wobei das Auslösekriterium erfüllt ist, wenn der Absolutwert des inkrementellen Gegensystemstromdifferentials ($\Delta I_{2D} = |\Delta I_{2D}|$) einen zuvor festgelegten Schwellenwert überschreitet.

FIG 1

**Beschreibung**

Die Erfindung betrifft ein Verfahren zum Erkennen eines Windungsfehlers in einem Transformator eines Wechselstrom führenden elektrischen Energieversorgungsnetzes, bei dem auf der Oberspannungsseite (H) und der Unterspannungsseite (X) des Transformators phasenleiterbezogene Strommesswerte erfasst werden; aus den phasenleiterbezogenen Strommesswerten für die Oberspannungsseite (H) und die Unterspannungsseite (X) jeweils Gegensystemstromwerte ($I_{2TH}$, $I_{2TX}$) bestimmt werden; aus der absoluten Summe der Gegensystemstromwerte das Gegensystemstromdifferential ($I_{2D} = |I_{2TH} + I_{2TX}|$) gebildet wird; mit Hilfe des Gegensystemstromdifferentials eine Auslösegröße und mit Hilfe der Auslösegröße ein Auslösekriterium definiert werden; und bei dem wenigstens ein Stabilisierungskriterium festgelegt wird; wobei ein Fehlersignal erzeugt wird, wenn neben dem Auslösekriterium wenigstens ein Stabilisierungskriterium erfüllt ist.

Die Erfindung betrifft ferner eine Schutzeinheit.

Der Schutz von Transformatoren in Energieversorgungsnetzen erfolgt heute mit einer Vielzahl von Schutzverfahren. Neben dem sogenannten Buchholzschutz, bei dem die Gasbildung im Transformatoröl überwacht wird, wird heutzutage vor allem der Differentialschutz eingesetzt. Hierbei werden am Schutzobjekt ermittelte Differenzströme ausgewertet. Um die Sicherheit zu erhöhen, werden zusätzlich Überstromschutzverfahren, Erdfehlerdifferentialschutz und, je nach Leistungsgröße, auch der Impedanzschutz verwendet.

Die Fehlerarten in Transformatoren sind sehr vielfältig, da hierbei insbesondere auch interne Fehler auftreten können, die durch Kurzschlüsse zwischen den Windungen der Transformatorwicklungen hervorgerufen werden.

Windungsschlüsse können beispielsweise beim Einschalten der Transformatoren auftreten, da die auftretenden hohen Einschaltströme in den Wicklungen starke Vibrationen und damit starke mechanische Belastungen erzeugen, die zu den Windungsschlüssen führen können.

Die Erkennung von Windungsfehlern in Transformatoren erfordert einen empfindlichen Schutzmechanismus. Bei vielen der oben genannten Schutzverfahren sind interne Fehler nur schwer erkennbar, da zwar innerhalb einer kurzgeschlossenen Windung ein sehr hoher Strom fließen kann, dieser von außen aber kaum messbar ist. Somit sind Windungsfehler im Allgemeinen schwierig zu erkennen, da sie nur einen sehr kleinen Anstieg des Stromes an den Klemmen des Transformators verursachen. Der Strom an der Fehlerstelle ist wegen kurzgeschlossener Windungen hingegen sehr hoch und sehr gefährlich für die Transformatoren. Die heutzutage üblicherweise eingesetzten Schutzeinrichtungen erfassen die Leiterströme an beiden Seiten des Transformators und detektieren einen inneren Fehler durch den im Falle eines Windungsschlusses auftretenden Differenzstrom, wodurch im Allgemeinen jedoch keine ausreichende Empfindlichkeit erzielt wird, um Windungsschlüsse frühzeitig zu erkennen. Daher müssen sich bei herkömmlichen Schutzprinzipien interne Fehler in Transformatoren so weit ausweiten, dass sie von außen über den Differenzstrom oder Überströme erkennbar sind.

Aus der US 7,812,615 B2 und EP 3 595 144 B1 sind jeweils Verfahren zum Erkennen eines Windungsschlusses in einem Transformator offenbart. Diese Verfahren basieren auf der Bestimmung des Gegensystemstromes auf der Ober- und Unterspannungsseite des Transformators. Der Gegensystemstrom ist im bei fehlerfreiem Betrieb des Transformators nahezu gleich Null.

Auch aus der Patentschrift US 7,903,381 B2 ist ein Schutzverfahren bekannt, das mit Gegensystemströmen arbeitet.

Aufgabe der Erfindung ist es, ein Verfahren der eingangs genannten Art anzugeben, bei dem eine noch empfindlichere Erkennung eines Windungsfehlers in einem Transformator ermöglicht wird.

Diese Aufgabe wird erfindungsgemäß dadurch gelöst, dass ein inkrementelles Gegensystemstromdifferential $\Delta I_{2D}$ als Auslösegröße verwendet wird, das als absolute Differenz von einem aktuellen Gegensystemstromdifferential $I_{2D}$ und einem um eine Netzfrequenzperiode phasenverschobenen Gegensystemstromdifferential $I_{2D}^{b}$ gebildet wird, wobei das Auslösekriterium erfüllt ist, wenn der Absolutwert des inkrementellen Gegensystemstromdifferentials ($\Delta I_{2D} = |\Delta I_{2D}|$) einen zuvor festgelegten Schwellenwert überschreitet.

Eine erfindungsgemäße Schutzeinheit ist zur Durchführen des erfindungsgemäßen Verfahrens eingerichtet.

Die Erfindung macht Gebrauch von dem bekannten Ansatz, dass neben einem ersten Hauptkriterium, das hier als Auslösekriterium bezeichnet ist, ein Hilfs- oder Stabilitätskriterium erfüllt sein muss, um das Auslösen eines Fehlersignals herbeizuführen. Im Rahmen der Erfindung wird jedoch die Empfindlichkeit des Auslösekriteriums deutlich erhöht. Erfindungsgemäß wird vorgesehen, an die Stelle des Gegensystemstromdifferentials $I_{2D}$ als Auslosegröße ein inkrementelles Gegensystemstromdifferential $\Delta I_{2D}$ zu setzen und das Auslösekriterium unangetastet zu lassen, so dass dieses erfüllt ist, wenn ein zuvor festgelegter Schwellenwert von der Auslösegröße wie beim Stand der Technik überschritten wird. Als Schwellenwert dient im Rahmen der Erfindung ein inkrementelles Grenz-Gegensystemstromdifferential. Im Rahmen der Erfindung wurde erkannt, dass sich das inkrementelle Gegensystemstromdifferential einfach ermitteln lässt. Das Gegensystemstromdifferential $I_{2D}$ ist eine Zeigergröße. Im stationären Nichtfehlerfall tritt ein Gegensystemstromdifferential $I_{2D}$ grundsätzlich nur in Folge von Messfehlern auf. Dabei ist das Gegensystemstromdifferen-

tial $\underline{I}_{2D}$ jedoch eine periodisch wiederkehrende Größe. Somit sollte die absolute Differenz eines aktuellen Gegen-systemstromdifferentials $\underline{I}_{2D}$ und eines Gegensystemstromdifferentials $\underline{I}_{2D}^{b}$ , das um eine Periode phasenverschoben ist, also zeitlich eine Periode zurück liegt, im Nullbereich liegen. Dies gilt bei einem fehlerfreien Betrieb des Transformators. Erst im Fehlerfall kommt es zu einem deutlichen Anstieg des inkrementellen Gegensystemstromdifferentials, wobei auf einen Windungsfehler geschlossen werden kann. Das Auslösekriterium wird im Rahmen der Erfindung daher empfindlicher eingestellt als die Auslösekriterien des Standes der Technik. Dabei bleibt es spezifisch und deutet daher auf einen Windungsfehler, also einen Kurzschluss im Inneren des Transformators hin.

Im Rahmen der Erfindung wird das Gegensystemstromdifferential $\underline{I}_{2D}$ wie üblich ermittelt. Zunächst werden die Ströme aller Phasenleiter aller Wicklungen gemessen. Im Rahmen der Erfindung kann der Transformator auch mehr als zwei Wicklungen aufweisen. Das erfindungsgemäße Verfahren ist für Transformatoren mit beliebig vielen Wicklungen geeignet. Ein solcher Transformator weist beispielsweise drei, vier oder fünf Wicklungen auf.

Zum Erfassen der Ströme, die in den Phasenleitern aller Wicklungen fließen, dienen beispielsweis induktive Stromwandler, die den Strom eines Phasenleiters induktiv erfassen und ausgangsseitig analoge Messignale breitstellen, aus denen sich nach Eichung der Strom in dem jeweiligen Phasenleiter ergibt. Die analogen Messignale können unter Gewinnung von Messwerten zeitlich abgetastet werden. Die so erhaltenen Messwerte können anschließend mittels Analog-Digitalwandler digitalisiert werden. Es ergeben sich auf diese Weise phasenleiterbezogene Strommesswerte. Diese Ausführungen sind jedoch nur beispielhaft aufzufassen und sollen die Schutzbereich der Erfindung in keiner Weise begrenzen.

Um die Ströme der Phasenleiter einer Wicklung mit den Strömen der Phasenleiter einer anderen Wicklung vergleichen zu können, müssen Korrekturrechnungen, genauer Phasen- und Kopplungskorrekturrechnungen durchgeführt werden. Diese Korrekturrechnungen sind jedoch aus dem Stand der Technik bekannt, so dass hier nicht genauer darauf eingegangen zu werden braucht.

Anschließend wird die rechnerische Zerlegung der Ströme in voneinander unabhängige Symmetrien also in die Ströme des Mitsystems, des Gegensystems und des Nullsystems unter Gewinnung von "gemessenem" Mitsystemstrom, Gegensystemstrom und des Nullsystemstrom durchgeführt. Dieses Verfahren ist dem Fachmann jedoch ebenfalls bekannt. Weitere Erläuterungen hierzu können daher an dieser Stelle entfallen.

Der Gegensystemstrom ist bei einem fehlerfreien Betrieb einer Wicklung k eines Transformators T nahezu gleich Null. Auf den Mitsystemstrom wird im Index des Zeichens für die Strommesswerte *I* mit der Ziffer 1, auf den Gegensystemstrom mit der Ziffer 2 und auf dem Nullsystemstrom mit der Ziffer 0 verwiesen.

Geht man von einem Transformator mit zwei Wicklungen aus, der also eine Primär- oder Hochspannungswicklung H und eine Sekundär- oder Niederspannungswicklung X aufweist, ergibt sich der Gegensystemstrom der Hochspannungswicklung H des Transformators T zu $\underline{I}_{2TH}$, wobei der Unterstrich von *I* darauf hinweist, dass es sich um eine Zeigergröße handelt, der Gegensystemstrom also phasenabhängig gemessen wurde oder besser ermittelt wurde. Der Index D verweist im weiteren Verlauf auf eine differentielle Größe, also hier auf die absolute Differenz von Werten, die auf beiden Seiten des Transformators erfasst oder ermittelt wurde.

Das aktuelle Gegensystemstromdifferential $\underline{I}_{2D}$ ergibt sich bei dem oben genannten Beispiel daher gemäß ($\underline{I}_{2D}$ = |$\underline{I}_{2TH}$ + $\underline{I}_{2TX}$|). Auf eine um eine Periode der Netzfrequenz phasenverschobene also zeitlich um eine Periode zurück liegende Größe wird im Folgenden mit einem hochgestellten b verwiesen. Demgemäß ergibt sich für das um eine Periode phasenverschobene Gegensystemstromdifferential folgende Schreibweise: $\underline{I}_{2D}^{b}$ .

Das inkrementelle Gegensystemstromdifferential $\Delta\underline{I}_{2D}$ ergibt sich demnach gemäß $\Delta\underline{I}_{2D} = \left| \underline{I}_{2D} + \underline{I}_{2D}^{b} \right|$. Hierbei handelt es sich ebenfalls um eine Zeigergröße. Als Auslösegröße wird im Rahmen der Erfindung der Absolutwert des inkrementellen Gegensystemstromdifferentials verwendet, das wie folgt gebildet wird:

$$\Delta I_{2D} = \left| \Delta\underline{I}_{2D} \right|.$$

Übersteigt diese Auslösegröße einen Grenz- oder mit anderen Worten Schwellenwert, der beispielsweise als Parameter basierend auf Vorversuchen ermittelt wurde, ist im Rahmen der Erfindung das Auslösekriterium erfüllt. Der Schwellenwert kann auch mit Hilfe von analytischen Rechnungen ermittelt werden.

Grundsätzlich kann dieses Auslösekriterium im Rahmen der Erfindung mit beliebigen weiteren Kriterien gemeinsam verwendet werden, die vom Auslösekriterium abweichen. Diese weiteren Kriterien sind im Folgenden als Stabilisierungskriterien bezeichnet. Bevorzugt werden im Rahmen der Erfindung jedoch folgende Stabilisierungskriterien verwendet.

Erfindungsgemäß wird ein Fehlersignal ausgelöst, wenn das Auslösekriterium und wenigstens ein Stabilisierungskriterium erfüllt sind.

Vorteilhafterweise wird ein Fehlersignal ausgelöst, wenn neben dem Auslösekriterium mehrere Stabilisierungskriterium erfüllt sind. Durch die Verwendung mehrerer Hilfs- oder Stabilisierungskriterien wird die Sicherheit des erfindungsgemäßen Verfahrens weiterhin erhöht.

Gemäß einer bevorzugten Variante wird ein Fehlersignal ausgelöst, wenn neben dem Auslösekriterium alle Stabilisierungskriterium erfüllt sind. Dies Variante basiert auf der Erkenntnis, dass Windungsfehler nur schwer sicher zu erkennen sind. Verwendet man daher nicht einen oder mehrere, sondern alle Stabilisierungskriterien, die hier vorgestellt werden, kann mit hoher Sicherheit auf einen Windungsschluss geschlossen werden, wenn ein Fehlersignal vorliegt.

Gemäß einer weiteren vorteilhaften Ausgestaltung des erfindungsgemäßen Verfahrens wird für jede Periode des Wechselstroms ein wahrer Stromeffektivwert ermittelt und mit Hilfe des wahren Stromeffektivwertes eine erste Stabilisierungsgröße berechnet. Im Rahmen der Erfindung wurde erkannt, dass die wahren Effektivwerte, die einem Fachmann eher unter dem im Englischen verwendeten Begriff "true RMS values" bekannt sind, nicht nur die fundamentale Komponente einer Größe umfassen, sondern auch harmonischen Komponenten höherer Ordnung, wobei letztere bei einem Windungsschluss auftreten.

Gemäß einer diesbezüglich zweckmäßigen Weiterentwicklung werden die wahren Stromeffektivwerte ($I_{TrRMS\ ka}$) für jeden Phasenleiter (a, b, c) einer Transformatorwicklung (k) phasenabhängig ermittelt, wobei von den aktuellen wahren Stromeffektivwerten um eine Periode des Wechselstroms phasenverschobene wahre Stromeffektivwerte ( $I^{b}_{TrRMS\ ka}$ ) unter Gewinnung von inkrementellen Effektivwerten $\Delta I_{TrRMS\ k,a}$ für jede Wicklung (k)

$$\left( \begin{bmatrix} \Delta I_{TrRMS\ k,a} \\ \Delta I_{TrRMS\ k,b} \\ \Delta I_{TrRMS\ k,c} \end{bmatrix} = \begin{bmatrix} I_{TrRMS\ k,a} \\ I_{TrRMS\ k,b} \\ I_{TrRMS\ k,c} \end{bmatrix} - \begin{bmatrix} I^{b}_{TrRMS\ k,a} \\ I^{b}_{TrRMS\ k,b} \\ I^{b}_{TrRMS\ k,b} \end{bmatrix} \right)$$

phasenleiterbezogenen abgezogen werden, wobei anschließend ein Mittelwert über alle Phasenleiter (a,b,c) der besagten Wicklung (k) unter Gewinnung eines mittleren inkrementellen Wicklungsstromeffektivwerts ($\Delta I_{\Sigma RMS,k}$) für jede Wicklung gebildet wird, wobei anschließend die Wicklungsstromeffektivwerte ($\Delta I_{\Sigma RMS,k}$) aller Wicklungen (k) des Transformators miteinander verglichen werden und der größte Wicklungsstromeffektivwert ($\Delta I_r$) als zweite Stabilisierungsgröße bestimmt wird, wobei ein erstes Stabilisierungskriterium erfüllt ist, wenn die Auslösegröße den größten Wicklungsstromeffektivwert ($\Delta I_r$) multipliziert mit einem zuvor festgelegten Faktor (C) überschreitet.

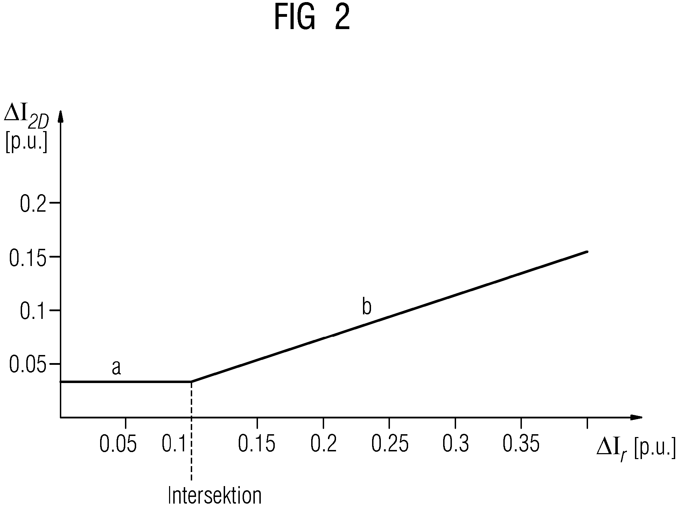

Gemäß dieser Variante der Erfindung wird mit Hilfe der wahren Stromeffektivwerte ein zuverlässiges Hilfs- oder Stabilisierungskriterium definiert, das auf Windungsfehler hinweist. Um auf das Vorliegen des ersten Stabilisierungskriteriums zu prüfen, müssen Auslöse- und Stabilisierungsgröße miteinander verglichen werden. Zur weiteren Erläuterung wird auf die Ausführungen zu Figur 2 verwiesen.

Bei einer weiteren Variante der Erfindung wird zur Ermittlung einer zweiten Stabilisierungsgröße $C_{D12}$ die vektorielle Differenz zwischen dem inkrementellen Gegensystemstromdifferential $\Delta I_{2D}$ und dem inkrementellen Mitsystemstromdifferential $\Delta I_{2D}$ gebildet und auf den Absolutwert des inkrementellen Gegensystemstromdifferentials normiert, wobei ein zweites Stabilisierungskriterium erfüllt ist, wenn die zweite Stabilisierungsgröße einen zuvor festgelegten Schwellenwert unterschreitet. Die dieser Ausführungsform der Erfindung zu Grunde liegende Idee ist, dass bei einem Windungsfehler nicht nur die Absolutwerte von dem inkrementellen Mit- und Gegensystemdifferentialstroms identisch sind, sondern auch die Phasenlage von diesen. Es werden daher wieder inkrementelle Werte gebildet. Hierzu sei auf die oben stehenden Ausführungen verwiesen. Mit anderen Worten wird von den aktuell gemessenen Mit- und Gegenstromdifferentialen jeweils das um eine Periode der Netzfrequenz phasenverschobenen Mit- beziehungsweise Gegenstromdifferential abgezogen. Anschließend wird jeweils der Absolutwert berechnet. Es ergibt sich die zweite Stabilisierungsgröße $C_{D12}$ wie folgt:

$$C_{D12} = \frac{\left| \Delta \underline{I}_{2D} - \Delta \underline{I}_{1D} \right|}{\left| \Delta \underline{I}_{2D} \right|}$$

Um bei der Implementierung möglicherweise auftretende Probleme zu beseitigen, wird vorgeschlagen, dass die Normierung auf den Absolutwert des inkrementellen Gegenstromdifferentials nur dann durchgeführt wird, wenn dieses größer oder gleich einer Kleinstgrenze ist. Andernfalls sollte $C_{D12}$ gleich Null gesetzt werden. Als Kleinstgrenze kommt beispielsweise 0,01 in Betracht.

Im Rahmen der Erfindung kann vorgesehen sein, eine dritte Stabilisierungsgröße mit Hilfe des Absolutwertes

eines inkrementellen Nullstromdifferentials ($|\Delta I_{0D}|$) zu ermitteln. Bei dieser Variante wird das Nullsystem betrachtet und zum Erkennen von Windungsfehlern eingesetzt.

Gemäß einer diesbezüglichen zweckmäßigen Weiterentwicklung wird der Absolutwert des inkrementellen Nullstromdifferentials ($|\Delta I_{0D}|$) unter Gewinnung der dritten Stabilisierungsgröße ($C_{D02}$) auf den Absolutwert des inkrementellen Gegenstromdifferentials ($|\Delta I_{2D}|$) normiert, wobei ein drittes Stabilisierungskriterium erfüllt ist, wenn die dritte Stabilisierungsgröße einen zuvor festgelegten Schwellenwert unterschreitet.

Zur Ermittlung inkrementeller Größen wird wie weiter oben erläutert vorgegangen. Zunächst wird das Nullsystemstromdifferential berechnet. Hierzu wird die absolute Differenz von den auf beiden Seiten des Transformators gemessenen Nullsystemstrom gebildet. Von dem aktuellen Nullsystemstromdifferential wird das um eine Periode vorausgehende Nullsystemstromdifferential abgezogen und anschließend der Absolutwert dieser Differenz gebildet. Es ergibt sich das inkrementelle Nullstromdifferential, eine Zeigergröße aus deren Absolutwert sich die dritte Stabilisierungsgröße $C_{D02}$ wie folgt berechnet.

$$C_{D02} = \frac{|\Delta \underline{I}_{0D}|}{|\Delta \underline{I}_{2D}|}$$

Um bei der Implementierung möglicherweise auftretende Probleme zu beseitigen, wird vorgeschlagen, dass die Normierung auf den Absolutwert des inkrementellen Gegenstromdifferentials nur dann durchgeführt wird, wenn dieses größer oder gleich einer Kleinstgrenze ist. Andernfalls sollte auf die Kleinstgrenze normiert werden. Als Kleinstgrenze kommt beispielsweise 0,01 in Betracht.

Die Netzfrequenz ist im Rahmen der Erfindung die Frequenz der Wechselspannung des Energieverorungsnetzes.

Im Rahmen der Erfindung wurde erkannt, dass das inkrementelle Nullsystemstromdifferential, das aus den phasenleiterbezogenen Strommesswerten leicht ermittelt werden kann, im Fehlerfall ein vorgegebenes Verhältnis zu dem inkrementellen Gegensystemstromdifferential aufweist. Bei einem Windungsschluss, mit anderen Worten Windungsfehler, wird dieses Verhältnis niemals überschritten.

Gemäß einer zweckmäßigen Weiterentwicklung wird eine vierte Stabilisierungsgröße ($\alpha_{D02}$) mit Hilfe der Winkeldifferenz zwischen dem inkrementellen Nullstromdifferential ($\Delta I_{0D}$) und dem inkrementellen Gegenstromdifferential $\Delta I_{2D}$ ermittelt, wobei ein viertes Stabilisierungskriterium erfüllt ist, wenn die vierte Stabilisierungsgröße einen Grenzwinkel unterschreitet. Zur Ermittlung der inkrementellen Größen sei auf die oben gemachten Ausführungen verwiesen. Auch hier wird empfohlen, das vierte Stabilisierungskriterium nur dann wie vorgeschlagen zu verwenden, wenn das inkrementelle Nullstromdifferential und das inkrementelle Gegenstromdifferential größer oder gleich einem Kleinstwert sind. Andernfalls sollte $\alpha_{D02}$ gleich Null gesetzt werden.

Im Rahmen der Erfindung wurde ebenfalls erkannt, dass die Phasenlage zwischen dem inkrementellen Nullstromdifferential ($\Delta I_{0D}$) und dem inkrementellen Gegenstromdifferential $\Delta I_{2D}$ im Fehlerfall berechnet werden kann. Die so berechnete Phasenlage ist bei einem Windungsschluss oder Windungsfehler des Transformators immer kleiner als ein vorgegebener Grenzwinkel. Wird dieser unterschritten, ist das vierte Stabilisierungskriterium erfüllt.

Weitere Vorteile bringt es mit sich, wenn jedes Stabilisierungskriterium auf einer zugeordneten Stabilisierungsgröße basiert, die von den Stabilisierungsgrößen abweicht, die ebenfalls in dem erfindungsgemäßen Verfahren verwendet werden.

Die Erfindung wird nachfolgend anhand von Ausführungsbeispielen näher erläutert, wobei gleiche Bezugszeichen auf gleich wirkende Bauteile verweisen und wobei

Figur 1     eine Ausführungsform eines Transformators, auf den das erfindungsgemäße Verfahren angewendet werden kann, und

Figur 2     ein Diagramm zur Erläuterung des ersten Stabilisierungskriteriums zeigen

Windungsfehler in Transformatoren von Energieversorgungsnetzen stellen besondere Anforderungen an die den Transformator überwachende Schutztechnik. Zwar können innerhalb eines Transformators, zwischen den durch einen Windungsschluss fehlerhaft verbundenen Windungen durchaus hohe Ströme fließen. Diese sind jedoch an den äußeren Klemmen des Transformators, also seinen Anschlüssen, jedoch kaum messbar und können daher mit herkömmlichen Schutzkonzepten, wie einem Differentialschutz oder einem Überstromschutz, nur schwer erkannt werden.

Windungsfehler entstehen beispielsweise durch starke mechanische Belastungen, z.B. Vibrationen, innerhalb des Transformators oder durch Alterung der Isolierung zwischen den Windungen. Die zwischen den fehlerhaften Windungen fließenden hohen Ströme können zu einer lokalen Überhitzung und zu einer Ausbreitung des Fehlers im Transformator führen und sind daher durch eine den Transformator überwachende Schutzeinrichtung möglichst frühzeitig zu erkennen.

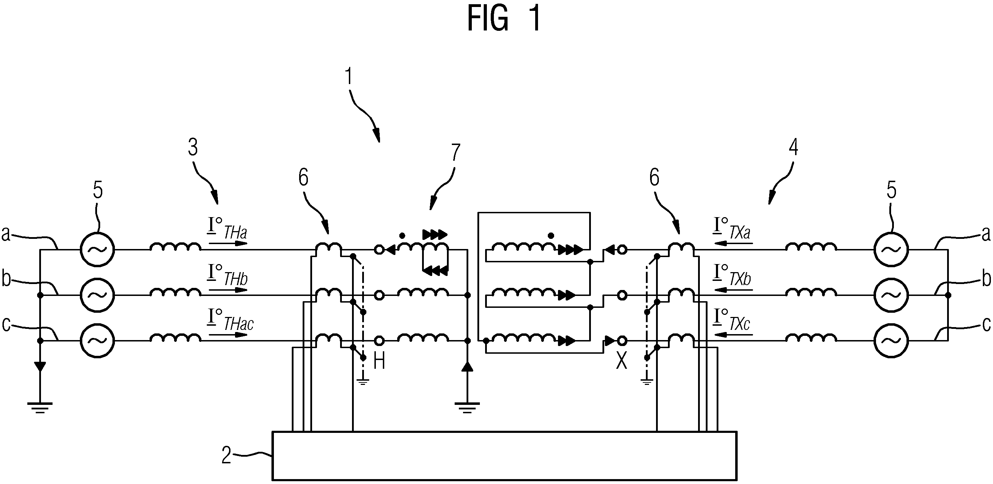

Figuren 1 zeigt einen Transformator 1 sowie eine erfindungsgemäße Schutzeinheit 2, auf der das erfindungsgemäße Verfahren implementiert ist. Dabei ist der Transformator 1 nur schematisch anhand seiner Wicklungen verdeutlicht, wobei eine Hochspannungswicklung mit ihrem Anschluss H galvanisch mit einem ersten Energieversorgungsnetz 3, das ein Hochspannungspotential aufweist, und eine Niederspannungswicklung mit ihrem Anschluss X galvanisch mit einem zweiten Energieversorgungsnetz 4 verbunden ist, das auf einem im Vergleich mit dem ersten Energieversorgungsnetz 3 niedrigeren Hochspannungspotential liegt. Im Folgenden wird die mit dem Anschluss H verbundene Wicklung mit H und die mit dem Anschuss X verbundene Wicklung mit X referenziert. Dabei weisen die Energieversorgungsnetze 3, 4 jeweils drei Phasenleiter a, b und c auf. Die Phasenleiter der Wicklung H sind zu einem geerdeten Sternpunkt verschaltet. Die Niederspanungswicklung X verfügt über eine Dreiecksschaltung. Entsprechendes gilt für die angeschlossenen Energieversorgungsnetze 3 beziehungsweise 4. In der Wicklung H des Transformators ist ein Windungsfehler 7 im Phasenleiter a verdeutlicht.

Für jeden der Phasenleiter a, b, c ist durch ein Wechselspannungssymbol 5 angedeutet, dass der Phasenleiter einen Wechselstrom führt. In den Phasenleitern des Energieversorgungsnetz 3 fließen die Ströme $I_{THa}^0$, $I_{THb}^0$, $I_{THc}^0$, wobei die Indices a, b und c auf die jeweiligen Phasenleiter verweisen. Im Energieversorgungsnetz 4 fließen in den Phasenleitern a, b und c die Ströme $I_{TXa}^0$, $I_{TXb}^0$, $I_{TXc}^0$. Zum Erfassen dieser Ströme dienen induktive Stromwandler 6 die ausgangsseitig mit der Schutzeinheit 2 verbunden sind.

Wie weiter oben ausgeführt, werden die erfassten Ströme $I_{THa}^0$, $I_{THb}^0$, $I_{THc}^0$ unter Gewinnung von Strommesswerten jeweils abgetastet und durch Analog-Digital-Wandlung in digitale Strommesswerte überführt. Das weiter oben dargestellte Verfahren kann so von der Schutzeinheit 2 durgeführt werden, die dazu einen figürlich nicht dargestellten Mikro-Prozessor und eine Speichereinheit aufweist, auf der die zur Durchführung des erfindungsgemäßen Verfahrens notwendige Software sowie Schwellen- oder Grenzwerte gespeichert sind.

Figur 2 zeigt ein zweidimensionales Koordinatensystem zur Verdeutlichung des weiter oben erläuterten ersten Stabilisierungskriteriums. In dem gezeigten Koordinatensystem ist auf der Abszisse der größte Wicklungsstromeffektivwert $\Delta I_r$ in willkürlichen Einheiten (p.u.) abgetragen. Die Ordinate zeigt die Auslösegröße also den Absolutwert des inkrementellen Gegensystemstromdifferentials $\Delta I_{2D}$ ebenfalls in willkürlichen Einheiten. In dem Diagramm erstreckt sich in einem Bereich a bei einem konstanten inkrementellen Gegensystemstromdifferential $\Delta I_{2D}$ von 0,03 eine horizontale Gerade bis zu einer Intersektion $\Delta I_r = 0,1$. Diese horizontale Gerade stellt einen Minimalschwellwert für das Auslösekriterium $\Delta I_{2D}$ dar. In diesem Bereich ist das erste Stabilisierungskriterium immer erfüllt. Ab der besagten Intersektion von $\Delta I_r = 0,1$ schließt sich eine Gerade mit einer definierten Steigung hier 0,4 in einem Bereich an, der in der Figur 2 mit b bezeichnet ist. Liegt die Auslösegröße $\Delta I_{2D}$ oberhalb dieser Geraden, ist das erste Stabilisierungskriterium erfüllt.

**Patentansprüche**

1. Verfahren zum Erkennen eines Windungsfehlers in einem Transformator (1) eines Wechselstrom führenden elektrischen Energieversorgungsnetzes (3,4), bei dem

   - auf der Oberspannungsseite (H) und der Unterspannungsseite (X) des Transformators (1) phasenleiterbezogene Strommesswerte erfasst werden;
   - aus den phasenleiterbezogenen Strommesswerten für die Oberspannungsseite (H) und die Unterspannungsseite (X) jeweils Gegensystemstromwerte ($I_{2TH}$, $I_{2TX}$) bestimmt werden;
   - aus der absoluten Summe der Gegensystemstromwerte das Gegensystemstromdifferential ($I_{2D} = |I_{2TH} + I_{2TX}|$) gebildet wird;
   - mit Hilfe des Gegensystemstromdifferentials eine Auslösegröße und mit Hilfe der Auslösegröße ein Auslösekriterium definiert werden; und bei dem
   - wenigstens ein Stabilisierungskriterium festgelegt wird;
   - wobei ein Fehlersignal erzeugt wird, wenn neben dem Auslösekriterium wenigstens ein Stabilisierungskriterium erfüllt ist,

   **dadurch gekennzeichnet, dass**

   - ein inkrementelles Gegensystemstromdifferential $\Delta I_{2D}$ als Auslösegröße verwendet wird, das als absolute Differenz von einem aktuellen Gegensystemstromdifferential $I_{2D}$ und einem um eine Netzfrequenzperiode

phasenverschobenen Gegensystemstromdifferential $I^b_{2D}$ gebildet wird, wobei das Auslösekriterium erfüllt ist, wenn der Absolutwert des inkrementellen Gegensystemstromdifferentials ($\Delta I_{2D} = |\Delta I_{2D}|$) einen zuvor festgelegten Schwellenwert überschreitet.

2. Verfahren nach Anspruch 1,
   **dadurch gekennzeichnet, dass**
   ein Fehlersignal ausgelöst wird, wenn neben dem Auslösekriterium mehrere Stabilisierungskriterium erfüllt sind.

3. Verfahren nach Anspruch 2,
   **dadurch gekennzeichnet, dass**
   ein Fehlersignal ausgelöst wird, wenn neben dem Auslösekriterium alle Stabilisierungskriterien erfüllt sind.

4. Verfahren nach einem der vorhergehenden Ansprüche,
   **dadurch gekennzeichnet, dass**
   für jede Periode des Wechselstroms ein wahrer Stromeffektivwert ermittelt und mit Hilfe des wahren Stromeffektivwertes eine erste Stabilisierungsgröße berechnet wird.

5. Verfahren nach Anspruch 4,
   **dadurch gekennzeichnet, dass**

   die wahren Stromeffektivwerte ($I_{TrRMS\ ka}$) für jeden Phasenleiter (a, b, c) einer Transformatorwicklung (k) phasenabhängig ermittelt werden, wobei von den aktuellen wahren Stromeffektivwerten die um eine Periode des Wechselstroms phasenverschoben wahren Stromeffektivwerten ($I^b_{TrRMS\ ka}$) unter Gewinnung von inkrementellen Effektivwerten $\Delta I_{TrRMS\ k,a}$ für jede Wicklung (k)

$$\left(\begin{bmatrix}\Delta I_{TrRMS\ k,a}\\\Delta I_{TrRMS\ k,b}\\\Delta I_{TrRMS\ k,c}\end{bmatrix} = \begin{bmatrix}I_{TrRMS\ k,a}\\I_{TrRMS\ k,b}\\I_{TrRMS\ k,c}\end{bmatrix} - \begin{bmatrix}I^b_{TrRMS\ k,a}\\I^b_{TrRMS\ k,b}\\I^b_{TrRMS\ k,b}\end{bmatrix}\right)$$

   abgezogen werden, wobei anschließend ein Mittelwert über alle Phasenleiter (a,b,c) der besagten Wicklung (k) unter Gewinnung eines mittleren inkrementellen Wicklungsstromeffektivwert ($\Delta I_{\Sigma RMS,k}$) für jede Wicklung gebildet wird, wobei anschließend der Wicklungsstromeffektivwert ($\Delta I_{\Sigma RMS,k}$) aller Wicklungen (k) des Transformators (1) miteinander verglichen werden und der größte Wicklungsstromeffektivwert ($\Delta I_r$) als erste Stabilisierungsgröße bestimmt wird, wobei ein erstes Stabilisierungskriterium erfüllt ist, wenn die Auslösegröße den größten Wicklungsstromeffektivwert ($\Delta I_r$) multipliziert mit einem zuvor festgelegten Faktor (C) überschreitet.

6. Verfahren nach einem der vorhergehenden Ansprüche,
   **dadurch gekennzeichnet, dass**
   zur Ermittlung einer zweiten Stabilisierungsgröße $C_{D12}$ die vektorielle Differenz zwischen dem inkrementellen Gegensystemstromdifferential $\Delta I_{2D}$ und einem inkrementellen Mitsystemstromdifferential $\Delta I_{2D}$ gebildet und auf den Absolutwert des inkrementellen Gegensystemstromdifferentials normiert, wobei ein zweites Stabilisierungskriterium erfüllt ist, wenn die zweite Stabilisierungsgröße einen zuvor festgelegten Schwellenwert unterschreitet.

7. Verfahren nach einem der vorhergehenden Ansprüche,
   **dadurch gekennzeichnet, dass**
   eine dritte Stabilisierungsgröße mit Hilfe des Absolutwertes eines inkrementellen Nullstromdifferentials ($|\Delta I_{0D}|$) ermittelt wird.

8. Verfahren nach Anspruch 7,
   **dadurch gekennzeichnet, dass**
   der Absolutwert des inkrementellen Nullstromdifferentials ($|\Delta I_{0D}|$) unter Gewinnung der dritten Stabilisierungsgröße ($C_{D02}$) auf den Absolutwert des inkrementellen Gegenstromdifferentials ($|\Delta I_{2D}|$) normiert wird, wobei ein drittes Stabilisierungskriterium erfüllt ist, wenn die dritte Stabilisierungsgröße einen zuvor festgelegten Schwellenwert unterschreitet.

9. Verfahren nach einem der vorangehenden Ansprüche,
**dadurch gekennzeichnet, dass**
eine vierte Stabilisierungsgröße ($\alpha_{D02}$) mit Hilfe der Winkeldifferenz zwischen dem inkrementellen Nullstromdifferential ($\Delta \underline{I}_{0D}$) und dem inkrementellen Gegenstromdifferential $\Delta \underline{I}_{2D}$ ermittelt wird, wobei ein viertes Stabilisierungskriterium erfüllt ist, wenn die vierte Stabilisierungsgröße einen Grenzwinkel unterschreitet.

10. Verfahren nach einem der vorangehenden Ansprüche,
**dadurch gekennzeichnet, dass**
jedes Stabilisierungskriterium auf einer zugeordneten Stabilisierungsgröße basiert, die von den Stabilisierungsgrößen ebenfalls in dem besagten Verfahren verwendeter Stabilisierungskriterien abweicht.

11. Schutzeinheit (2) zum Erzeugen eines Fehlersignals bei einem Windungsfehler in einem Transformator (1) in einem Wechselstrom führenden elektrischen Energieversorgungsnetz (3,4),
**dadurch gekennzeichnet, dass**
die besagte Schutzeinheit (2) zum Ausführen eines Verfahrens gemäß einem der vorhergehenden Ansprüche eingerichtet ist.

FIG 1

# FIG 2

**EUROPÄISCHER RECHERCHENBERICHT**

Europäisches Patentamt
European Patent Office
Office européen des brevets

**Nummer der Anmeldung**

EP 23 17 4875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BARAKAT MOHAMMED A ET AL: "Protection of transformer due to external fault between two voltage levels using overvoltage protection and sequence component of currents", ELECTRIC POWER SYSTEMS RESEARCH, ELSEVIER, AMSTERDAM, NL, Bd. 184, 3. April 2020 (2020-04-03), XP086135205, ISSN: 0378-7796, DOI: 10.1016/J.EPSR.2020.106339 [gefunden am 2020-04-03] | 1,11 | INV. H02H7/045 |
| A | * das ganze Dokument * | 2-10 | |
| X | OLIVEIRA LUIS M R ET AL: "Comparing Power Transformer Turn-to-Turn Faults Protection Methods: Negative Sequence Component Versus Space-Vector Algorithms", IEEE TRANSACTIONS ON INDUSTRY APPLICATIONS, IEEE SERVICE CENTER, PISCATAWAY, NJ, US, Bd. 53, Nr. 3, 1. Mai 2017 (2017-05-01), Seiten 2817-2825, XP011650198, ISSN: 0093-9994, DOI: 10.1109/TIA.2016.2613506 [gefunden am 2017-05-18] | 1,11 | |
| A | * das ganze Dokument * | 2-10 | |

RECHERCHIERTE SACHGEBIETE (IPC)

H02H

-/--

Der vorliegende Recherchenbericht wurde für alle Patentansprüche erstellt

| Recherchenort | Abschlußdatum der Recherche | Prüfer |
|---|---|---|
| München | 24. Oktober 2023 | Trifonov, Antoniy |

Seite 1 von 2

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FARZIN NIMA ET AL: "Practical implementation of a new percentage-based turn-to-turn fault detection algorithm to transformer digital differential relay", INTERNATIONAL JOURNAL OF ELECTRICAL POWER & ENERGY SYSTEMS, JORDAN HILL, OXFORD, GB, Bd. 121, 20. Mai 2020 (2020-05-20), XP086168121, ISSN: 0142-0615, DOI: 10.1016/J.IJEPES.2020.106158 [gefunden am 2020-05-20] * das ganze Dokument * ----- | 1,11 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 24. Oktober 2023 | Trifonov, Antoniy |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7812615 B2
- EP 3595144 B1

- US 7903381 B2